**Europäisches Patentamt**

**European Patent Office**

**Office européen des brevets**

(19)

(11)     **EP 0 940 936 B1**

(12)                     **EUROPEAN PATENT SPECIFICATION**

(45) Date of publication and mention
of the grant of the patent:
**29.11.2006   Bulletin 2006/48**

(51) Int Cl.:
*H04B 7/26* (2006.01)          *H04J 3/16* (2006.01)
*H04J 13/02* (2006.01)

(21) Application number: **98303327.5**

(22) Date of filing: **28.04.1998**

(54) **Time division multiple access communication system**

Übertragungssystem mit Zeitmultiplexvielfachzugriff

Système de communication à accès multiple par répartition dans le temps

(84) Designated Contracting States:
**DE ES FI FR GB IT SE**

(30) Priority:   **06.03.1998   GB 9804891**

(43) Date of publication of application:
**08.09.1999   Bulletin 1999/36**

(73) Proprietor: **LUCENT TECHNOLOGIES INC.**
**Murray Hill, New Jersey 07974-0636 (US)**

(72) Inventors:
 • **Frieberg, Lorenz Fred**
**Grange Park,**
**Swindon,**
**Wiltshire SN5 6EB (GB)**
 • **Allpress, Stephen Alan,**
**Kenholme**
**Fordingbridge,**
**Hampshire SP6 1PT (GB)**
 • **Lin, Jie (Jeff), Dr.**
**Torquay,**
**Devon TQ2 8RD (GB)**
 • **Cao, Qiang**
**Swindon,**
**Wiltshire SN5 7EG (GB)**
 • **Wood, Stephen Andrew**
**Hotwells,**
**Bristol, BS8 4YE (GB)**

(74) Representative: **Sarup, David Alexander et al**
**Lucent Technologies EUR-IP UK Ltd**
**Unit 18, Core 3**
**Workzone**
**Innova Business Park**
**Electric Avenue**
**Enfield, EN3 7XB (GB)**

(56) References cited:
**EP-A- 0 681 406**          **EP-A- 0 731 571**
**WO-A-97/32413**          **WO-A-97/49200**
**GB-A- 2 252 887**          **GB-A- 2 295 525**
**US-A- 5 420 864**

**Description**

This invention relates to time division multiple access communication systems.

Traditionally, user traffic in a code division multiple access system is circuit switched. Once a call has been set up, the connection is maintained throughout the duration of the service request. A dedicated traffic channel is assigned to each active user for both the uplink and the downlink. Each dedicated traffic channel is characterised by a unique spreading code. Throughout the entire session, the dedicated traffic channel is used exclusively by the active user.

The circuit switched method is robust, and result in high system capacity by supporting: macro-diversity (soft handover); power control; limited random access overhead.

However, in wideband multi-service code division multiple access systems, extremely burst traffic needs to be supported. Burst traffic is supported by adjusting the data rate, and hence the spreading factor and spreading code. However, the need to quickly adjust the spreading code leads to highly complex code allocation algorithms.

Another popular method for accommodating bursty services is through packet switched data. ETSI UMTS W-CDMA (European Telecommunications Standards Institute Universal Mobile Telecommunications Service Wide Band code Division Multiple Access) and ARIB W-CDMA (Association of Radio Industry Business Wide Band Code Division Multiple Access) propose to use RACH/FACH (Random Access Channel/Forward Access Channel) to transmit infrequent bursty packet data. The advantage of such a scheme is quick set up time, dedicated channel is not required.

However, this transmission mechanism uses open loop power control only, and macro-diversity is not supported.

Published European patent application EP-A-0 731 571, published United Kingdom patent application GB-A-2252887, and United States patent US 5 420 864 provide background. It is known from EP-A-0 731 571 to provide a time division multiple access communication system, in which down link data are transmitted over a data channel in repeated time frames each containing a plurality of user time slots, and down link set up information is transmitted over a control channel to indicate from which time slot a user terminal should extract data, each frame on the data channel including a user packet flag to indicate whether or not each user time slot in the frame contains data, and each user terminal being responsive to the set up information and to the user packet flags to extract data from its assigned user time slot in those frames which the slot is indicated to contain data.

The present invention is characterised over the disclosure of EP-A-0 731 571 in that each frame on the data channel includes the user packet flag in a first time slot, the user packet flag including a plurality of fields each associated with a respective one of said plurality of user time slots, the values in each field being indicative of whether the respective user time slot contains data.

A plurality of bursty packet data users may be multiplexed onto the same downlink dedicated traffic channel. The multiplexing scheme allows low complexity code allocation; macro-diversity and soft handover; low associated control overhead; and limited closed loop power control.

One embodiment of the invention will now be described, by way of example, with reference to the accompanying drawing, in which:

Figure 1 is a schematic representation of a down link time frame on a dedicated transmission channel in a communication system embodying the invention;
Figure 2 is a schematic representation of a plurality of down link time frames in the system of Figure 1;
Figure 3 is a schematic representation of a user packet flag in a frame on the down link in the system of Figure 1;
Figure 4 is a schematic representation of an uplink data channel and the uplink control channel in relation to the down link time frame of Figure 1; and
Figure 5 shows power levels on the down link.

In an initialisation stage, user terminals, e.g. mobile stations acquire slot and frame synchronisation. Mobile stations also perform codegroup identification and scrambling-code identification. After the scrambling code has been identified, the primary CCPCH (Comon Caontrol Physical Channel) can be detected, the system and cell specific BCCH (Broadcast Contract Channel) information can be read. RACH will be known to the mobile stations.

For mobile station initiated bursty packet data transmission, mobile stations perform a random access request procedure. Based on the successful reception of the random access request from a mobile station, a base station informs the mobile station on which dedicated transmission channel packet data is to be transmitted. For base station initiated bursty packet data transmission, the base station simply pages the user(s) and indicates the dedicated transmission channel on which packet data is to be transmitted. The mobile station acknowledges setting up the dedicated transmission channel. In both cases, mobile stations are informed by the base station which time slot in the dedicated transmission channel frame they take packets from. In other words, the mobile station knows the location of the slot in the dedicated transmission channel time frame to receive packets if there are any.

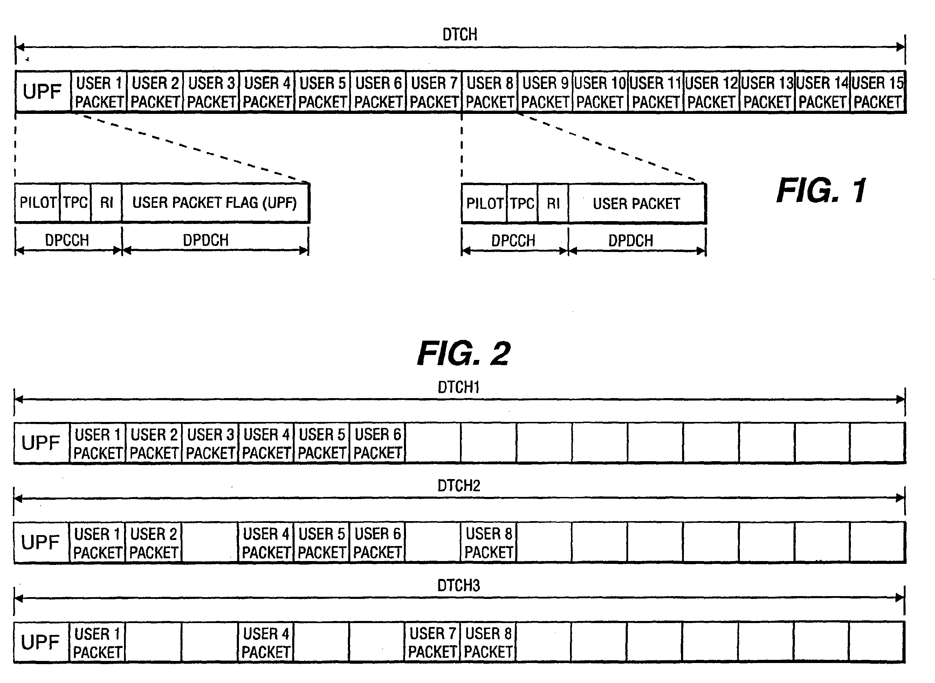

The downlink dedicated transmission channel is organised as shown in Figure 1. A dedicated transmission channel time frame consists of 16 time slots. The first slot is used to transmit a user packet flag indicating the location of a packet which is addressed to a specific user. The rest of the slots in the frame will be used to transmit data user packets to the users.

Control information (pilot, transmission power control, and rate information) is transmitted on dedicated physical control channel and data information is transmitted on dedicated physical data channel. The control channel and data channel are time multiplexed as shown in Figure 1. The dedicated physical data channel carries user packets and user packet flag information.

A common situation in the dedicated transmission channel is that not all frame slots are filled up by user packets. This is shown in Figure 2 where three successive frames are shown.

To multiplex bursty packet data users onto a single physical dedicated traffic channel a simplified orthogonal spreading code allocation is utilised while maintaining most of the benefits of virtual circuit transmission.

The user packet flag (UPF) is composed of 15 fields, corresponding to at most 15 slots for user packets in a frame

$$UPF=[UPF1, \ UPF2, \ UPF3.....,UPF15]$$

Each field of the user packet field UPF indicates the status of a corresponding slot (whether there is a packet for the specific user or not)

$$UPFi = status$$

where

$$status = \begin{cases} 0 & no \ packet \\ 1 & a \ packet \end{cases}$$

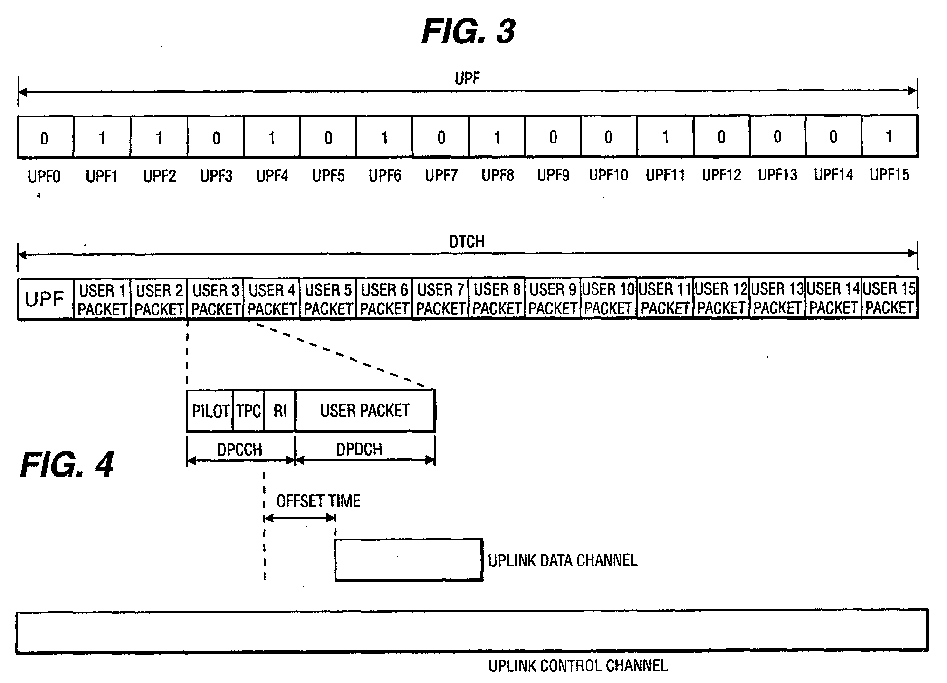

The user packet flag UPF is merely a bit sequence of length L. Typically, L is equal to 15+1 (including first bit = 0 permanently), since in the embodiment at most 15 users are assigned to receive bursty packet data from the dedicated transmission channel. As soon as mobile stations receive the user packet flag UPF they will be able to identify if there is any packet for them contained in the frame. If there is, they extract the relevant packets. An example of a user packet flag UPF is shown in Figure 3. This UPF pattern (UPF-6A9 1 H) indicates that there are packets in the frame for the users presently associated with the time slots identified by:

User1, User2, User4, User6, User8, User11, and user15

and that there are no packets in the frame for the users presently associated with the time slots identified by:

User3, User5, User7, User9 User10, User12, User13 and User14

The flag for time slot zero UPF0 is always set as 0. The user packet flag UPF contains important information. To make it more robust, repetition can be used to obtain diversity gain, e.g. each bit may be repeated at least once.

Control information (Pilot, TPC [Transmission Power Control], and RI [Rate Information]) is transmitted in every slot on the dedicated transmission channel DTCH (Dedicated Traffic Channel), even when there is no user data. Therefore, soft handover, as well as limited closed loop power control, still retains.

Since downlink bursty traffic transmission is removed to a dedicated transmission channel DTCH rather than FACH, traffic on RACH/FACH loop decreases. Consequently, probability for random access increases, resulting in a decrease of blocking rate.

The uplink transmission is not time multiplexed; each user is assigned a unique spreading code, as shown in Figure 4. Since the control channel is transmitted continuously for each user in the uplink, the base station is able to monitor the received power continuously.

However, the BTS (base tranceiver station) is limited in the number of power control symbols it is able to send each user. In fact, the BTS only transmits a TPC symbol relevant to an individual user, during the slot assigned to that user.

Consequently, the user may receive as few as one TPC symbol per frame. The uplink power control is limited, not in the quality of the information, but in how often the information can be transmitted. Hence, to maximise the effectiveness of the uplink power control, and to limit intra-cell interference, the uplink data should be transmitted as soon as possible after receiving the TPC symbol for the multiplexed downlink channel. The offset time, as displayed in Figure 4, should be kept to minimum. Fortunately, it is expected that there will be a high degree of asymmetry in W-CDMA bearer services. The amount of uplink data will be very small in relation to the downlink data. Therefore, the uplink data can be concentrated in time, and sent shortly after receiving the TPC symbol.

The uplink power control scheme specified in UMTS limits the BTS to one symbol during the slot assigned to that user on the down link. Since mobile stations would receive their power control symbol intermittently, e.g. one per frame, due to the bursty nature of the downlink transmission, the rate of adjustment may not be sufficient to keep up with changing uplink power requirements. In order to improve the position, a further piggy back symbol is used to transmit power adjustment information in each slot on the downlink, so that the power adjustment required is transmitted in two symbols.

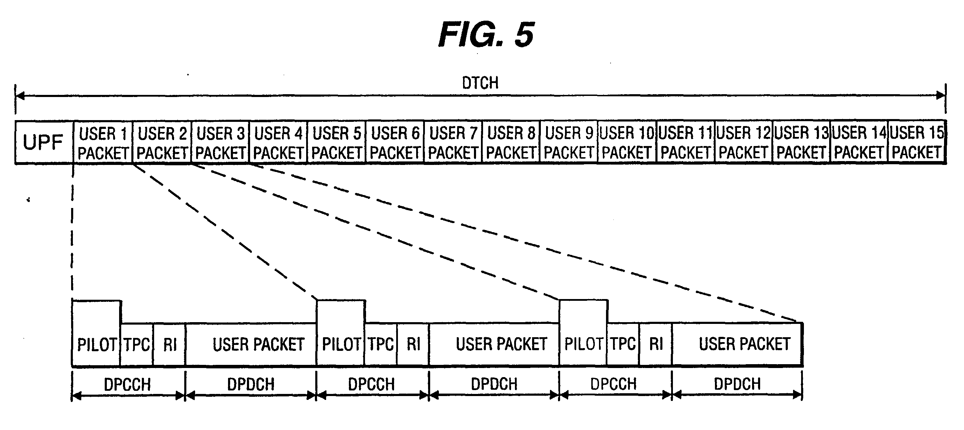

In each time slot, the data is destined to a particular user only. However, the pilot symbols are used by all users. Therefore, the downlink transmit power of the pilot symbols must be constant and high enough for all users to properly receive. The data portion may be adjusted for each user. Each user's continuous uplink control channel contains all downlink power control symbols defined for a dedicated traffic channel. Hence the downlink can adjust the power level of user data properly as shown in Figure 5.

## Claims

1. A time division multiple access communication system, in which down link data are transmitted over a data channel in repeated time frames each containing a plurality of user time slots, and down link set up information is transmitted over a control channel to indicate from which time slot a user terminal should extract data, each frame on the data channel including a user packet flag to indicate whether or not each user time slot in the frame contains data, and each user terminal being responsive to the set up information and to the user packet flags to extract data from its assigned user time slot in those frames which the slot is indicated to contain data,
   <u>characterized in that</u>
   each frame on the data channel includes the user packet flag in a first time slot,
   the user packet flag including a plurality of fields each associated with a respective one of said plurality of user time slots, the values in each field being indicative of whether the respective user time slot contains data.

## Patentansprüche

1. Zeitmultiplex-Vielfachzugriffs-Kommunikationssystem, bei dem Abwärtsstreckendaten über einen Datenkanal in wiederholten Zeitrahmen übertragen werden, die mehrere Benutzerzeitschlitze enthalten, und Abwärtsstrecken-Aufbauinformationen über einen Steuerkanal übertragen werden, um anzuzeigen, aus welchem Zeitschlitz ein Benutzerendgerät Daten extrahieren soll, wobei jeder Rahmen auf dem Datenkanal ein Benutzerpaketflag enthält, um anzuzeigen, ob jeder Benutzerzeitschlitz in dem Rahmen Daten enthält oder nicht, und jedes Benutzerendgerät auf die Aufbauinformationen und die Benutzerpaketflags reagiert, um in den Rahmen, für die der Schlitz als Daten enthaltend angezeigt ist, Daten aus seinem zugewiesenen Benutzerzeitschlitz zu extrahieren,
   **dadurch gekennzeichnet, daß** jeder Rahmen auf dem Datenkanal das Benutzerpaketflag in einem ersten Zeitschlitz enthält,
   wobei das Benutzerpaketflag mehrere Felder enthält, die jeweils mit einem jeweiligen der mehreren Benutzerzeitschlitze assoziiert sind, wobei die Werte in jedem Feld anzeigen, ob der jeweilige Benutzerzeitschlitz Daten enthält.

## Revendications

1. Système de communication à accès multiple par répartition dans le temps, dans lequel des données de liaison descendante sont transmises sur un canal de données dans des trames temporelles répétées contenant chacune une pluralité de tranches de temps d'utilisateur, et des informations d'établissement de liaison descendante sont transmises sur un canal de commande pour indiquer à partir de quelle tranche de temps un terminal d'utilisateur doit extraire des données, chaque trame sur le canal de données comportant un fanion de paquet d'utilisateur pour indiquer si chaque tranche de temps d'utilisateur dans la trame contient ou non des données, et chaque terminal d'utilisateur répondant aux informations d'établissement et aux fanions de paquets d'utilisateur en extrayant des données de sa tranche de temps d'utilisateur assignée dans les trames où il est indiqué que la tranche contient des données,

**caractérisé en ce que**

chaque trame sur le canal de données comporte le fanion de paquet d'utilisateur dans une première tranche de temps, le fanion de paquet d'utilisateur comportant une pluralité de champs associés chacun à une tranche de temps respective de ladite pluralité de tranches de temps d'utilisateur, les valeurs dans chaque champ indiquant si la tranche de temps d'utilisateur respective contient ou non des données.

**FIG. 1**

DTCH

| UPF | USER 1 PACKET | USER 2 PACKET | USER 3 PACKET | USER 4 PACKET | USER 5 PACKET | USER 6 PACKET | USER 7 PACKET | USER 8 PACKET | USER 9 PACKET | USER 10 PACKET | USER 11 PACKET | USER 12 PACKET | USER 13 PACKET | USER 14 PACKET | USER 15 PACKET |

| PILOT | TPC | RI | USER PACKET FLAG (UPF) |
| DPCCH | | | DPDCH |

| PILOT | TPC | RI | USER PACKET |
| DPCCH | | | DPDCH |

**FIG. 2**

DTCH1

| UPF | USER 1 PACKET | USER 2 PACKET | USER 3 PACKET | USER 4 PACKET | USER 5 PACKET | USER 6 PACKET | | | | | |

DTCH2

| UPF | USER 1 PACKET | USER 2 PACKET | | USER 4 PACKET | USER 5 PACKET | USER 6 PACKET | | USER 8 PACKET | | | |

DTCH3

| UPF | USER 1 PACKET | | | USER 4 PACKET | | | USER 7 PACKET | USER 8 PACKET | | | |

## FIG. 3

UPF

| 0 | 1 | 1 | 0 | 1 | 0 | 1 | 0 | 1 | 0 | 0 | 1 | 0 | 0 | 0 | 1 |
|---|---|---|---|---|---|---|---|---|---|---|---|---|---|---|---|
| UPF0 | UPF1 | UPF2 | UPF3 | UPF4 | UPF5 | UPF6 | UPF7 | UPF8 | UPF9 | UPF10 | UPF11 | UPF12 | UPF13 | UPF14 | UPF15 |

DTCH

| UPF | USER 1 PACKET | USER 2 PACKET | USER 3 PACKET | USER 4 PACKET | USER 5 PACKET | USER 6 PACKET | USER 7 PACKET | USER 8 PACKET | USER 9 PACKET | USER 10 PACKET | USER 11 PACKET | USER 12 PACKET | USER 13 PACKET | USER 14 PACKET | USER 15 PACKET |
|---|---|---|---|---|---|---|---|---|---|---|---|---|---|---|---|

| PILOT | TPC | RI | USER PACKET |
|---|---|---|---|

DPCCH · DPDCH

## FIG. 4

OFFSET TIME

UPLINK DATA CHANNEL

UPLINK CONTROL CHANNEL

EP 0 940 936 B1

# FIG. 5

DTCH

| UPF | USER 1 PACKET | USER 2 PACKET | USER 3 PACKET | USER 4 PACKET | USER 5 PACKET | USER 6 PACKET | USER 7 PACKET | USER 8 PACKET | USER 9 PACKET | USER 10 PACKET | USER 11 PACKET | USER 12 PACKET | USER 13 PACKET | USER 14 PACKET | USER 15 PACKET |

| PILOT | TPC | RI | USER PACKET | PILOT | TPC | RI | USER PACKET | PILOT | TPC | RI | USER PACKET |

DPCCH | DPDCH | DPCCH | DPDCH | DPCCH | DPDCH

EP 0 940 936 B1